# EUROPÄISCHE PATENTANMELDUNG

(11) **EP 0 754 823 A1**
(43) Veröffentlichungstag der Anmeldung: **22.01.1997**
(21) Anmeldenummer: 96111257.0
(22) Anmeldetag: 12.07.1996
(51) Int. Cl.: E04H 12/22, B62B 5/04

(54) **Transportuntersatz für Sockel**

(30) Priorität: 17.07.1995 CH 2100/95
(71) Anmelder: Camenzind, Beat, 6403 Küssnacht am Rigi (CH)
(72) Erfinder: Camenzind, Beat, 6403 Küssnacht am Rigi (CH)
(74) Vertreter: Hotz, Klaus, Dipl.-El.-Ing./ETH Patentanwalt

(57) **Zusammenfassung**

Transportuntersatz **(10)** für einen Sockel. Der Transportuntersatz **(10)** dient zum Verschieben eines Sockels, in dem ein Vertikalträger, beispielsweise eines Sonnenschirms oder eines Wäscheständers, aufgenommen ist. Er weist eine horizontale Aufnahmevorrichtung **(18, 19)** für den Sockel auf, an welcher unten Rollkörper **(22, 23, 24, 25)** drehbar befestigt sind. Der Transportuntersatz **(10)** lässt sich mittels einer Bremsvorrichtung **(30 - 46)** arretieren, so dass er nicht unbeabsichtigt weggrollt.

## Beschreibung

Die Erfindung betrifft einen Transportuntersatz nach dem Oberbegriff des Patentanspruchs 1.

Transportuntersätze dieser Art dienen zum Verschieben von Sockein, welche zur Aufnahme von Vertikalstützen, insbesondere von Sonnenschirmen und Wäscheständern bestimmt sind. Solche Sockel sind verhältnismässig schwer, da sowohl geöffnete Somnnenschirme als auch mit Wäsche behängte Wäscheständer ein hohes Gewicht aufweisen, grosse Angriffsflächen für Wind bieten und daher leicht kippen. Die Sockel weisen einen meist runden oder annähernd quadratischen massiven Grundkörper auf, in welchem eine mittige Aufnahmevorrichtung in Form eines vertikalen Rohres für die Vertikalstütze des Sonnenschirms oder Wäscheständers befestigt ist. Der Grundkörper ist im allgemeinen ein gegossener Betonteil in Form eines flachen Kegels. Das beim den Gebrauch notwendige hohe Gewicht der Sockel erschwert es natürlich, diese zu verschieben. Es sind auch anfdere Sockel bekannt, die aus einem Kunststoffgefäss in Form eines flachen Behälters bestehen; diese Sockel werden in leerem Zustand erworben und zum Gebrauch gefüllt, beispielsweise mit Sand oder Wasser, so dass sie das für den Gebrauch notwendige Gewicht aufweisen; der Vorteil dieser Sockel gegenüber den herkömmlichen Sockeln aus Beton ist gering. Zwar sind sie im leeren Zustand bedeutend leichter als die Sockel aus Beton, und sie können, wenn sie nicht mehr gebraucht werden und zu versorgen sind, geleert werden. Dabei ist das Leeren von wassergefüllten Sockeln unproblematisch, während das Leeren von sandgefüllten Sockeln als eher umständlich bezeichnet werden. Leider sind aber wassergefüllte Sockel infolge des nicht sehr hohen speztifischen Gewichtes von Wasser verhältnismässig leicht und genügen daher für grosse Sonnenschirme und Wäscheständer sowie bei verhältnismässig viel Wind nicht den Anforderungen, die an sie gestellt werden. Ausserdem ist das Leeren der Sockel während ihres Gebrauches, d.h. wenn ein Sonnenschirm oder Wäscheständer in ihnen angeordnet ist, nicht möglich, während eine Verschiebung sowohl eines Sonnenschirmes wie auch eines Wäscheständers gerade während des Gebrauches infolge des wechselnden Sonnenstandes häufig sehr erwünscht wäre.

Aus diesem Grunde wurde versucht, andere Einrichtungen zu schaffen, welche den Transport der Sockel erleichtern. Beispielsweise sind aus der **CH-682 975 A1** und aus der **DE-38 39 013 A1** fahrbare Sockeleinrichtungen bekannt, die eine Einheit von Sockel und Transportuntersatz bilden. Diese Einrichtungen enthalten aber keinen separaten Transportuntersatz, der in Kombination mit einem ggfs schon vorhandenen ebenfalls separaten Sockel gebraucht werden könnte. Ein weiterer Nachteil dieser dieser fahrbaren Sockeleinrichtungen besteht darin, dass sie in ihrem Aufbau sperrig und aufwendig sind, viel Stauraum benötigen, wenn sie versorgt werden müssen und recht kostspielig sind. Eine einfachere und bessere Lösung stellen die in der **DE-32 26 482 A1** und in der **DE-32 27 689 A1** beschriebenen Einrichtungen dar, welche als reine Transportuntersätze ausgebildet und zur Aufnahme herkömmlicher Sockel geeignet sind. Aber auch diese Transportuntersätze sind mit einem Mangel behaftet; sie weisen nämlich keine Arretier- bzw. Bremsvorrichtung auf. Zwar ist die Gefahr des Wegrollens von Sonnenschirmen und Wäscheständern auf Kiesplätzen und Rasenflächen gering. Häufig werden Sonnenschirme und Wäscheständer aber auf Balkonen, Zinnen und Terassen verwendet, also auf Flächen, die verhältnismässig hart und glatt sind und gegenüber der Horizontalen einen gewissen Neigungswinkel aufweisen, so dass die Möglichkeit besteht, dass sich der Trnsportuntersatz zusammen mit dem Sockel und dem Sonnenschirm oder dem Wäscheständer in unerwünschter Weise von selbst verschiebt. Eine solche Verschiebung kann auch durch Winddruck auf den Stoffbezug des Sonnenschirms oder die am Wäscheständer aufgehängte Wäsche verursacht werden.

Die Aufgabe der Erfindung wird somit darin gesehen, einen Transportuntersatz der eingangs genannten Art vorzuschlagen, welcher keinen der Nachteile der vorbekannten Transportuntersätze aufweist.

Diese Aufgabe wird bei einem Transportuntersatz der eingangs genannten Art erfindungsgemäss durch die Merkmale des kennzeichnenden Teils des Patentanspruchs **1** gelöst. Vorteilhafte Weiterbildungen und bevorzugte Ausführungsbeispiele des erfindungsgemässen Transportuntersatzes werden durch die abhängigen Patentansprüche **2 - 10** definiert.

Der erfindungsgemässe Transportuntersatz unterscheidet sich von den vorbekannten Transportuntersätzen der gleichen Art dadurch, dass er eine Bremsvorrichtung aufweist. Dadurch lässt er sich problemlos auf geneigten Flächen sowie bei starkem Wind verwenden, ohne in unerwünschter Weise wegzurollen.

Die Bremsvorrichtung kann in der Art einer Kinderwagenbremse ausgebildet sein und einen Bremskörper aufweisen, der sich an einen der Rollkörper anlegen lässt. Es sind auch Rollen bekannt, welche eine integrierte, mit einem Fuss betätigbare Bremsvorrichtung aufweisen.

Besonders vorteilhaft ist aber eine Bremsvorrichtung, welche mittels eines an der Aufnahmevorrichtung angelenkten Hebels betätigbar ist. Der Hebel weist einen Betätigungsarm, welchen man zur manuellen Betätigung anfasst, und einen Bremsarm auf, an dessen Ende ein Bremskörper mit einer Bremsfläche befestigt ist. Durch Verschwenken des Hebels lässt sich die Bremsvorrichtung aus einer Ruhelage, in welcher der Bremskörper weder an der Bodenfläche noch an einem Rollkörper anliegt, in eine Wirklage verschwenken, in welcher die Bremsfläche sich - bei horizontaler Lage des Transportuntersatzes - auf gleichem oder minimal tieferen Niveau als die Mantellinien der Rollkörper befindet, mit welchen diese die Bodenfläche berühren, auf der die Transportvorrichtung steht.

Der Betätigungsarm des Hebels ist mit Vorteil zweifach abgekröpft und so geformt, dass er in der Wirklage der Bremsvorrichtung parallel zu einer Mantellinie des Sockels verläuft. Damit erreicht man nicht nur, dass der Transportuntersatz auch mit einem langen und daher die Betätigung erleichternden Hebel ästhetisch wirkt, sondern man verhindert auch Unfälle, da der Hebel in der Wirklage der Bremsvorrichtung praktisch nicht über den Bereich des Sockel hinausragt und somit keinen Anlass zum Darüberstolpern bildet.

Mit Vorteil wird der Betätigungsarm des Hebels so ausgebildet, dass er sich in der Ruhelage der Bremsvorrichtung als manuell betätigbarer Griff zu Ziehen oder Schieben und zum Lenken des Transportuntersatzes eignet.

Als Rollkörper werden im allgemeinen übliche Rollen vorgesehen, wobei man mindestens drei die Ecken eines Dreieckes bildende Rollen benötigt, von denen vorzugsweise mindestens eine als Lenkrolle ausgebildet ist.

Bei einer bevorzugten Ausführungsform des erfindungsgemässen Transportuntersatzes sind als Rollkörper vier Rollen vorgesehen, welche so angeordnet sind, dass sie die Ecken eines Viereckes, vorzugsweise eines Quadrats, bilden. Auch bei dieser Ausführung sind zwei benachbarte der vier Rollen bevorzugt als Lenkrollen ausgebildet.

Solange der Transportuntersatz auf einem Balkon, einer Terasse oder an einem anderen Ort mit einer relativ harten und ebenen Fläche benützt wird, sind die oben erwähnten Rollen als Rollkörper sehr geeignet. Bei unregelmässigem oder weichem Untergrund, wie er durch Kies, Rasen oder Erde gebildet wird, sind diese Rollen nicht besonders vorteilhaft, da sie die Neigung haben, unter dem Gewicht des Sockels einzusinken. Um dies zu verhindern, können die Rollkörper als Walzen ausgebildet werden. Bewährt ist eine Konstruktion mit zwei axial breiten Walzen, von denen die eine als Lenkwalze ausgebildet ist.

Zur Verschiebung des Transportuntersatzes auf Schnee wären Kufen nützlich. Beispielsweise könnte, wie es bei Kinderwagen üblich ist, unterhalb von je zwei Rollen eine Kufe befestigt werden. Es ist auch möglich, die schon erwähnten Walzen so auszubilden, dass sie axiale Endbereiche in Form von konvexen, zulaufenden Rotationskörpers aufweisen, deren untrste Linien, zusammen mit der Auflagefläche der Walzen, eine Kufenform ergeben.

Die horizontale Aufnahmefläche für den Sockel kann durch eine ggfs mit Durchbrüchen versehene Platte gebildet sein. Besonders geeignet, weil verhältnismässig leicht, ist eine horizontale Aufnahmevorrichtung, welche durch zwei sich in ihrem mittleren Bereich kreuzende Horizontalstreben, meist aus Flacheisengebildet ist, wobei deren Abmessungen etwa so gewählt werden, dass der Umkreis ihrer freien Enden annähernd der Grundfläche des Sockels entspricht. An zwei benachbarten freien Enden der Querstreben werden zwei Lenkrollen und an den weiteren Enden der Aufnahmevorrichtung zwei Laufrollen angeordnet.

Die beiden benachbarten freien Enden der Horizontalstreben, welche die Lenkrollen tragen, werden vorteilhaft durch eine Querstrebe verbunden, an welcher in der Mitte ein Ansatz befestigt ist, der sich nach aussen, vom Bereich, in dem sich die Horizontalträger kreuzen, weg erstreckt. Das äussere Ende des Ansatzes befindet sich etwa auf dem oben genannten Umkreis bzw. ragt um ein weniges unter dem Sockel hervor. Dieser Ansatz dient zur Befestigung des Hebels der Bremsvorrichtung.

Im weiteren sind bei der Ausführungsform des Transportuntersatzes mit Walzen auch die letzteren am Ansatz befestigt, und zwar über einen Bügel, in dem die axialen Enden der Drehachsen der Lenkrollen aufgenommen sind und dessen mittiger Teil drehbar im Ansatz gelagert ist.

Weitere Vorteile des erfindungsgemässen Transportuntersatzes werden im folgenden anhand bevorzugter Ausführungsbeispiele und mit Bezug auf die Zeichnung beschrieben. Es zeigt:
- **Fig. 1**: einen Transportuntersatz nach der Erfindung, mit einem Sockel,in einem Schaubild;
- **Fig. 2**: den in **Fig. 1** dargestellten Transportuntersatz, in einer Seitenansicht;
- **Fig. 3**: den in den **Fig. 1 - 2** dargestellten Transportuntersatz, in einer Draufsicht; und
- **Fig. 4**: einen weiteren Transportuntersatz nach der Erfindung, in einem Schaubild.

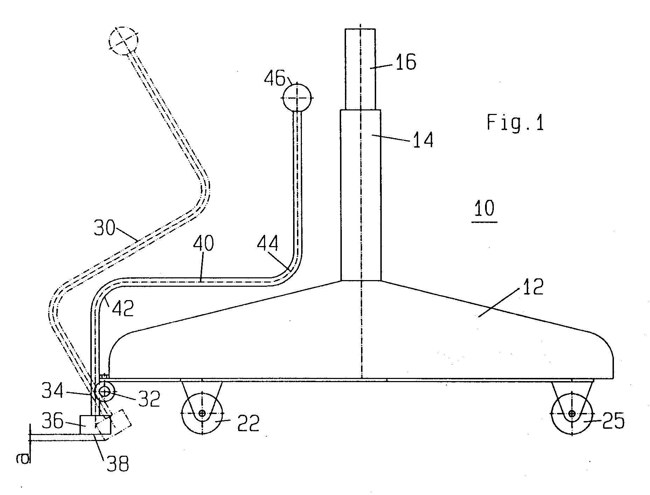

Der in **Fig. 1 - 3** abgebildete Transportuntersatz **10** dient zur Aufnahme eines runden Sockels **12**. Der Sockel **12** ist aus Beton gefertigt und weist ein mittiges Rohr **14** auf, welches eine Halterung für einen Vertikalträger **16** bildet, der zu einem nicht dargestellten Sonnenschirm oder zu einem Wäscheständer gehört. Der Transportuntersatz **10** enthält als horizontale Aufnahmevorrichtung für den Sockel **12** zwei Horizontalstreben **18**, **19**. Die Länge der Horizontalstreben **18**, **19** entspricht etwa dem Durchmesser der Grundfläche des Sockels **12**. Diese Horizontalstreben **18**, **19** kreuzen sich in einem Bereich **20**, in welchem sie aneinander befestigt sind, beispielsweise durch Schrauben, Nieten oder Schweissung. Die Horizontalstreben **18**, **19** weisen freie Enden **18a**, **18b** bzw. **19a**, **19b** auf. An den benachbarten freien Enden **18a**, **19a** sind zwei Lenkrollen **22**, **23**, und an den entgegengesetzten freien Enden **18b**, **19b** zwei Lauf- bzw. Bockrollen **24a**, **25a**, die beiden letzteren mit fluchtenden Drehachsen, angeordnet.

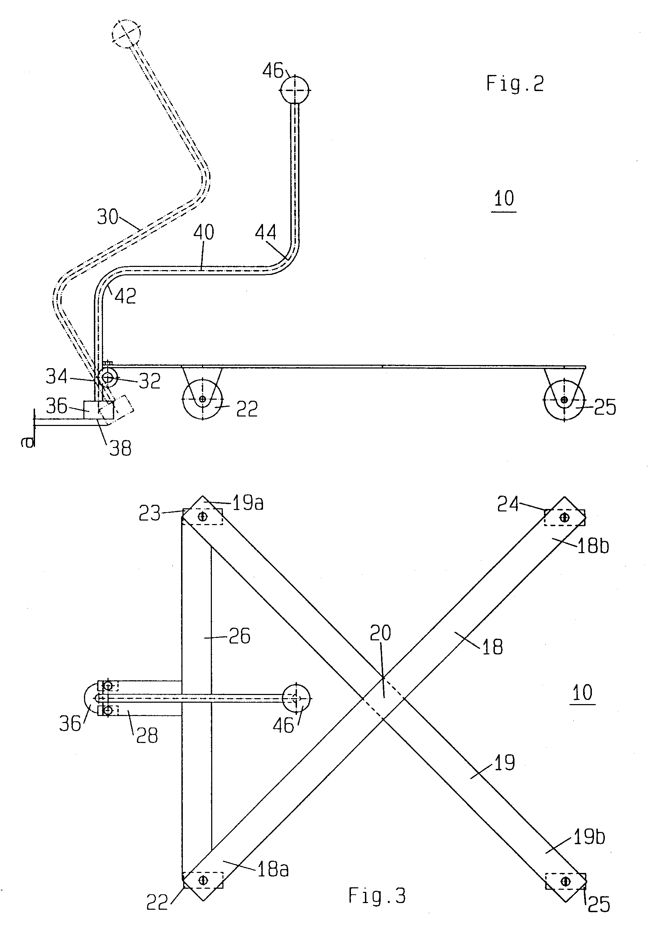

Eine horizontale Querstrebe **26** verbindet die Enden **18a**, **19a** und weist in ihrer Mitte einen senkrecht zu ihr gerichteten Ansatz **28** auf, der sich nach aussen, das heisst vom Bereich **20** weg, erstreckt. Das freie Ende des Ansatzes **26** ist vom Bereich **20** etwa gleich weit entfernt wie die Enden **18a**, **18b**, **19a**, **19b**, so dass es knapp unter dem Sockel **12** hervorragt. Der Ansatz **28** dient zur Befestigung einer Bremsvorrichtung, welche in **Fig. 2** mit ausgezogenen Linien in ihrer Wirklage und mit gestrichelten Linien beim Uebergang aus ihres Wirklage in ihre Ruhelage dargestellt ist. Die Bremsvorrichtung weist einen Hebel **30** auf, der über eine horizontale Schwenkachse **32** am Ansatz **28** angelenkt ist. Der Hebel **30** besitzt auf der einen Seite seines Anlenkungspunktes einen kurzen Bremsarm **34**, der an seinem freien Ende einen Bremskörper **36** mit einer Bremsfläche **38** trägt, wobei der Bremskörper **38** vorzugsweise aus einem elastisch leicht kompressiblen Material wie beispielsweise Kautschuk oder Kunststoff hergestellt ist. Jenseits seines Anlenkungspunktes setzt sich der Hebel **30** in einem Betätigungsarm **40** fort, dessen wirksame Länge bedeutend grösser ist als diejenige des Bremsarmes **34**. Der Betätigungsarm **40** weist zwei Abkröpfungen **42**, **44** auf, bzw ist so geformt, dass er in der Wirklage der Bremsvorrichtung etwa parallel zu und in geringem Abstand von einer Mantellinie des Sockels **12** verläuft. An seinem freien Ende weist der Betätigungsarm **40** einen Handgriff **46** auf, der einerseits zu Verschwenken der Bremsvorrichtung zwischen ihrer Wirklage und ihrer Ruhelage und anderseits zum Ziehen, Schieben und Lenken des Transportuntersatzes **10** dient, wenn sich die Bremsvorrichtung in ihrer Ruhelage befindet und der Transportuntersatz nicht **10** arretiert ist.

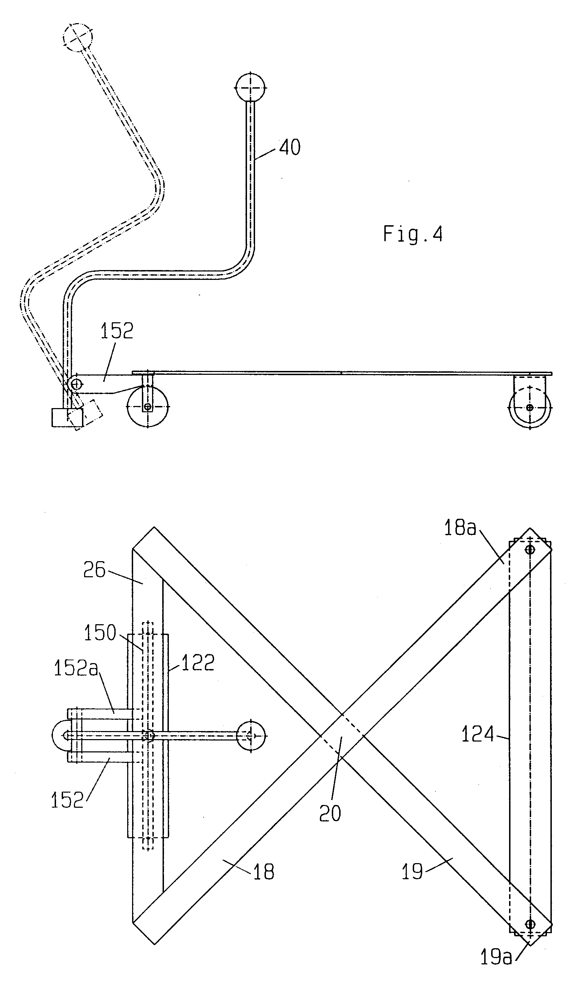

Die in **Fig. 4** dargestellte Ausführungsform des erfindungsgemässen Transportuntersatzes **110** weist als Rollkörper eine Lenkwalze **122** anstelle der beiden Lenkrollen **22**, **23** des Transportuntersatzes **10** und eine Laufwalze **124** anstelle der Laufrollen **24**, **25** auf. Die Breiten der Lenkwalze **122** und der Laufwalze **124** entsprechen etwa der Länge der Querstrebe **26**. Die Drehachse der Lenkwalze **122** ist mit ihren axialen Enden in einem Lagerbügel **150** aufgenommen, der in seiner Mitte eine Vertikalachse **152** besitzt, welche drehbar im Ansatz **28** gelagert ist. Die Bremsvorrichtung ist gleich ausgebildet wie bei dem in den **Fig. 1 - 3** dargestellten Transportuntersatz **10**. Die Laufwalze **124** ist an den Enden **18b**, **19b** der Horizontalstreben **18**, **19** gelagert.

Der neue Transportuntersatz eignet sich je nach der Ausbildung der Rollkörper als Walzen oder als Rollen spezifisch zum Verschieben von Sockeln auf weichem oder hartem Untergrund.

Die Bremsvorrichtung erlaubt es, den Transportuntersatz auch auf geneigten Flächen sicher zu arretieren; eine selbsttätige Lösung der Bremsvorrichtung ist nicht zu befürchten, da gemäss **Fig. 2** der Hebel **30** aus der Wirklage der Bremsvorrichtung nur über einen Totpunkt, in welchem der unterste Teil der Bremsfläche **38** um eine Strecke a tiefer angeordnet ist als in der Wirklage, in die Ruhelage bringbar ist.

Da der Transportuntersatz vom Sockel unabhängig ist, kann er auch zum Verschieben anderer Gegenstände verwendet werden, beispielsweise von Behältern mit Gartenabraum oder Wäsche.

## Patentansprüche

1. Transportuntersatz **(10; 110)** für einen Sockel **(12)**, welcher zur Aufnahme eines Vertikalträgers **(16)** bestimmt ist, mit einer horizontalen Aufnahmevorrichtung **(18, 19, 26)** für den Sockel **(12)**, welche über drehbar an ihr angeordnete Rollkörper **(22, 23, 24, 25; 122, 124)** abgestützt ist,
**dadurch gekennzeichnet**,
dass der Transportuntersatz **(10; 110)** eine aus einer Ruhelage in eine Wirklage bringbare Bremsvorrichtung **(30 - 46)** aufweist.

2. Transportuntersatz **(10; 110)** nach Patentanspruch **1**,
**dadurch gekennzeichnet**,
dass die Bremsvorrichtung einen an der Aufnahevorrichtung **(18, 19, 26**) angelenkten Hebel **(30)** mit einem Betätigungsarm **(40)** und mit einen Bremsarm **(34)** aufweist, welcher Bremsarm **(34)** einen Bremskörper **(36)** besitzt, der in der Wirklage der Bremsvorrichtung mit einer Bremsfläche **(38)** in der Höhe der untersten Mantellinien der genannten Rollkörper **(22, 23, 24, 25; 122, 124)** angeordnet ist.

3. Transportuntersatz **(10; 110)** nach Patentanspruch **2,**
**dadurch gekennzeichnet**,
dass der Betätigungsarm **(40)** zwei gegenläufige Abkröpfungen **(42, 44)** aufweist, um in der Wirklage der Bremsvorrichtung mindestens annähernd parallel zu und in geringem Abstand von der Aussenfläche des Sockels **(12)** zu verlaufen.

4. Transportuntersatz **(10; 110)** nach Patentanspruch **2,**
**dadurch gekennzeichnet**,
dass der Betätigungsarm **(40)** in der Ruhelage der Bremsvorrichtung einen manuell betätigbaren Zug- bzw. Schubarm und Lenkarm des Transportuntersatzes **(10; 110)** bildet.

5. Transportuntersatz **(10; 110)** nach Patentanspruch **1,**
**dadurch gekennzeichnet**,
dass die Aufnahmevorrichtung durch zwei sich kreuzende, aneinader befestigte Horizontalstreben **(18, 19)** gebildet ist, wobei zwei benachbarte Enden **(18a, 19a)** durch einen Querträger **(26)** verbunden sind, der einen Ansatz **(28)** aufweist, an welchem die Bremsvorrichtung angeordnet ist.

6. Transportuntersatz **(10)** nach Patentanspruch **1,**
**dadurch gekennzeichnet**,
dass als Rollkörper mindestens drei in den Ecken eines Polygons angeordnete Rollen vorgesehen sind, wobei mindestens eine Rolle eine Lenkrolle ist.

7. Transportuntersatz **(10)** nach Patentanspruch **1,**
**dadurch gekennzeichnet**,
dass als Rollkörper vier die Ecken eines Viereckes bildende Rollen **(22, 23, 24, 25)** vorgesehen sind, wobei mindestens zwei benachbarte Rollen als Lenkrollen **(22, 23)** und die anderen Rollen als Laufrollen **(24, 25)** ausgebildet sind. **(Fig. 1 - 3)**.

8. Transportuntersatz nach den Patentansprüchen **5** und **7,**
**dadurch gekennzeichnet**,
dass die Lenkrollen **(22, 24)** an den Enden **(18a, 19a)** und die Laufrollen **(23, 25)** an den Enden **(18b, 19b)** der Horizontalstreben **(18, 19)** drehbar befestigt sind.

9. Transportuntersatz **(110)** nach Patentanspruch **1,**
**dadurch gekennzeichnet**,
dass als Rollkörper zwei Walzen **(122, 124)** vorgesehen sind, wovon die eine als Lenkwalze **(122)** und die andere als Laufwalze **(124)** ausgebildet ist.

10. Transportuntersatz **(110)** nach den Patentansprüchen **5** und **9**,
**dadurch gekennzeichnet**,
dass die Lenkwalze **(122)** mit ihrer Drehachse in einem Lagerbügel **(150)** drehbar befestigt ist, welcher Lagerbügel **(150)** um eine Vertikalachse drehbar im Ansatz **(28)** gelagert ist, und dass die Laufwalze mit ihrer Drehachse an den Enden **(18b, 19b)** der Horizontalstreben **(18, 19)** drehbar befestigt ist.
